# EUROPÄISCHE PATENTSCHRIFT

(11) **EP 1 838 161 B1**
(45) Veröffentlichungstag und Bekanntmachung des Hinweises auf die Patenterteilung: **27.05.2015**
(21) Anmeldenummer: 06705793.5
(22) Anmeldetag: 17.01.2006
(51) Int. Cl.: A23G 9/38, A23C 11/10

(54) **VERFAHREN ZUR HERSTELLUNG EINER PFLANZLICHEN PROTEINZUTAT FÜR EIN SPEISEEIS SOWIE SPEISEEIS MIT DIESER PROTEINZUTAT**
METHOD FOR PRODUCING A VEGETABLE PROTEIN INGREDIENT FOR ICE CREAM AND ICE CREAM CONTAINING SAID PROTEIN INGREDIENT
PROCEDE DE PRODUCTION D'UN COMPLEMENT PROTEIQUE VEGETAL D'UNE GLACE ET GLACE CONTENANT CE COMPLEMENT PROTEIQUE

(30) Priorität: 18.01.2005 DE 102005002429
(43) Veröffentlichungstag der Anmeldung: 03.10.2007
(73) Patentinhaber: Fraunhofer-Gesellschaft zur Förderung der angewandten Forschung e.V., 80686 München (DE)
(72) Erfinder: EISNER, Peter, 85354 Freising (DE); MÜLLER, Klaus, 85356 Freising (DE); KNAUF, Udo, 97199 Ochsenfurt (DE); KLOTH, Gerhard, 18272 Güstrow (DE)
(74) Vertreter: Gagel, Roland
(86) Internationale Anmeldenummer: PCT/DE2006/000054
(87) Internationale Veröffentlichungsnummer: WO 2006/076889

(56) Entgegenhaltungen:
- EP-A- 1 405 572
- WO-A-99/51106
- WO-A-2004/093560
- DE-A1- 10 101 326
- US-A1- 2005 003 061
- US-B1- 6 335 044

## Beschreibung

### Anwendungsgebiet

Die Erfindung betrifft ein Verfahren zur Herstellung einer pflanzlichen Proteinzutat für ein Speiseeis, bei dem Lupinenkerne bereitgestellt und zunächst zerkleinert werden, in zumindest einem Protein-Extraktionsschritt ein Teil eines in den zerkleinerten Lupinenkernen enthaltenen Lupinenproteins in einer wässrigen Phase gelöst oder zumindest dispergiert wird, in der wässrigen Phase vorhandene Fasern abgetrennt werden, und das Lupinenprotein aus der wässrigen Phase abgetrennt wird, um die Proteinzutat zu erhalten. Die Erfindung betrifft auch ein Speiseeis, das die Proteinzutat aus Lupinen enthält.

### Stand der Technik

Eiskreme und andere kremige Speiseeis-Varianten enthalten tierische oder pflanzliche Fette und Milchprotein und/oder Milchzucker sowie teilweise Eiprotein. Milch- und Eiproteine erfüllen im Speiseeis neben einer eventuell erwünschten Geschmacksgebung insbesondere die Funktionen der Texturgebung. Die Herstellung von Speiseeis erfolgt im Wesentlichen durch Wiegen der Zutaten, Vormischen, Homogenisieren, Pasteurisieren, Abkühlen (+4°C), Reifenlassen, Freezen, Verpacken und Lagern.

Bekannt ist unter anderem Speiseeis wie z.B. Kremeis (mind. 50 % Milchanteil und auf einen Liter Milch mindestens 270 g Vollei oder 90 g Eigelb), Rahmeis (mind. 18 % Milchfett aus Schlagsahne), Eiskrem (mind. 10 % Milchfett), Einfacheiskrem (mind. 3 % Milchfett), Milcheis (Milchanteil mind. 70 %) und Eis mit Pflanzenfett (mind. 3 % pflanzliches Fett). Allen genannten Eissorten ist gemein, dass sie neben den tierischen oder pflanzlichen Fetten auch Milchprotein und Milchzucker (Lactose) enthalten. Viele Menschen haben allerdings eine Unverträglichkeit gegenüber Milchprodukten oder anderen tierischen Zutaten, so dass sie den Verzehr von Milch- und Sahneeis vermeiden sollten. Für diese Verbrauchergruppe gibt es bislang keine Alternative zu milchhaltigem Speiseeis mit vergleichbarem Genusswert.

Für den Genusswert beim Verzehr von Speiseeis ist die Kremigkeit von besonderer Bedeutung. Die Kremigkeit wird durch den Fettanteil und dessen Einbindung in die Gesamtmatrix mit bestimmt. Darüber hinaus entscheidet die Viskosität der Schmelze über die Kremigkeit des Eises. Eine höherviskose Schmelze wird im Mund als kremiger empfunden, als eine Schmelze mit niedriger Viskosität.

Zudem bestimmt das Abschmelzverhalten die organoleptische Empfindung während des Eisgenusses. Ein Speiseeis mit einem langsamen, gleichmäßigen Abschmelzverhalten wird als angenehmer empfunden als ein Speiseeis mit einem heterogenen und z.T. sehr schnellen Abschmelzverhalten. Ein weiterer wichtiger Qualitätsparameter ist das Mundgefühl und das Kälteempfinden beim Verzehr. Bei unzureichender Emulsionswirkung und Wasserbindung der Matrix bilden sich größere Eiskristalle, die ein raues Mundgefühl und einen wässrigen Eindruck entstehen lassen. Das Kälteempfinden wird von der Verfügbarkeit des Fettes mitbestimmt.

Kremige Speiseeissorten sind nach dem Stand der Technik nur durch größere Mengen an Fett erreichbar, wobei zur Erreichung des Kremigkeitsgefühls der Fettgehalt größer als 15 Gew.-%, besser größer als 20 Gew.-% sein sollte.

In bisher bekannten Speiseeis-Zubereitungen mit Pflanzenprotein-Anteilen, vor allem auf Basis von Soja, wurde versucht, die tierischen Emulgatoren durch Pflanzenproteine zu ersetzen. Zum Einsatz kamen hier getrocknete Pflanzenproteine, die in konventionellen wässrigen oder wässrigalkoholischen Extraktions-Verfahren und anschließender Trocknung als Pulver gewonnen wurden.

Einige der zum Einsatz kommenden Protein-Produkte wurden dabei aus Mehlen aus Proteinsaaten in wässrigen Extraktionsschritten hergestellt. Da die Faserfraktion in Mehlen in feinst partikulärer, vermahlener Form vorliegt, kann sie nach Stand der Technik von der Proteinlösung vor der Trocknung nicht vollständig abgetrennt werden. Somit gelangen bei Einsatz derartiger Proteine Faserstoffe in das Speiseeis.

Beschrieben wurden auch Versuche zur Herstellung von Speiseeis mit fermentierten Proteinzutaten. Diese enthalten jedoch Milchsäure in hoher Konzentration sowie vielfach Diacetyl, was oft unerwünscht ist und vom Verbraucher nicht akzeptiert wird.

Akzeptable sensorische Eigenschaften werden bei Pflanzeneissorten immer dann erhalten, wenn ein gewisser Anteil an Zutaten tierischer Herkunft, wie Milchfraktionen oder tierische Proteine, bspw. Casein oder Caseinate, zugesetzt werden. In diesem Fall steht dem Verbraucher zwar ein recht ansprechendes, aber kein rein pflanzliches Speiseeis zur Verfügung.

So zeigt beispielsweise die WO 2004/093560 A1 ein Verfahren zur Herstellung einer pflanzlichen Proteinzutat auf Basis von Lupinenprotein, bei dem Lupinenkerne zu Lupinenmehl zerkleinert werden und in einem Protein-Extraktionsschritt ein Teil des im Lupinenmehl enthaltenen Lupinenproteins in einer alkalischen wässrigen Phase gelöst wird. Das Lupinenprotein wird durch Fällung aus der wässrigen Phase abgetrennt und wieder in einem geeigneten Medium gelöst, um die Proteinzutat zu erhalten. Zur Herstellung eines Speiseeises mit dieser Zutat wird hier Coffee-mate^{®} zugesetzt, das Milcheiweiß enthält.

Vergleichende Untersuchungen mit den genannten pflanzlichen Produkten nach Stand der Technik zeigen deutliche sensorische Schwächen der Produkte im Vergleich zu konventioneller Eiskrem auf Basis von Milchzutaten. Vor allem die Kremigkeit und das Mundgefühl von konventioneller Eiskrem kann bislang mit pflanzlichem Speiseeis nicht erreicht werden. Aus diesen Gründen ist pflanzliches Speiseeis im Lebensmittelmarkt ein weitgehend unbekanntes Nischenprodukt.

Die Speiseeis-Produkte nach Stand der Technik, die aus pflanzlichen Protein-Zutaten hergestellt werden, haben für den Verbraucher einige Nachteile. So besteht bei Einsatz von Soja die Ungewissheit für den Verbraucher, ob im Produkt gentechnisch veränderte Zutaten enthalten sind. Dies kann nach aktuellen Erkenntnissen für Soja auch bei Anbau natürlicher Sorten oder bei ökologischem Anbau nicht mehr ausgeschlossen werden.

Bei Einsatz getrockneter Proteinzutaten ergeben sich bislang sensorische Nachteile, da in allen bekannten Trocknungsprozessen Oxidationsvorgänge ablaufen. Die entstehenden Oxidationsprodukte in der Proteinzutat reduzieren das Qualitätsempfinden z.B. durch ein Ranzigkeitsempfinden. Darüber hinaus führt eine Trocknung von wasserhaltigen Proteinen stets zu einer deutlichen Reduktion der Löslichkeit des Proteins. Bei Zugabe schlecht löslicher Protein-Zutaten in die Rezeptur eines Speiseeises entsteht eine Protein-Suspension, die unlösliche Proteinpartikel und -agglomerate enthält, die im Mund als rau empfunden werden. Mit der reduzierten Löslichkeit geht oft eine Reduktion der techno-Funktionalität, insbesondere der Emulgiereigenschaften einher. Sie können somit nicht zur Stabilisierung der Phasengrenzflächen und zur Steigerung der Kremigkeit beitragen.

Bei Einsatz faserhaltiger Zutaten wie z.B. auf Basis von Pflanzenproteinmehlen oder anderen faserhaltigen Proteinzutaten, entsteht ebenfalls ein raues Mundgefühl, da die Fasern im Eis nicht gelöst werden sondern dispergiert vorliegen.

Der mit solchen Produkten erzielbare subjektive Genusswert, die Kremigkeit und das Mundgefühl, sind mit dem Genusswert von milchproteinhaltiger Eiskreme nicht vergleichbar.

### Aufgabe der vorliegenden Erfindung

Die Aufgabe der vorliegenden Erfindung besteht darin, ein Speiseeis zur Verfügung zu stellen, das auch ohne Eiprodukte, Milchzucker, tierisches Protein, tierisches Fett und andere Zutaten tierischer Herkunft hergestellt werden kann und dennoch organoleptisch ansprechend ist und hinsichtlich Kremigkeit, Mundgefühl, Abschmelzverhalten und Kälteempfinden einen vergleichbaren oder verbesserten Genusswert aufweist wie Speiseeis mit tierischen Zutaten.

### Darstellung der Erfindung

Die Aufgabe wird mit dem Verfahren zur Herstellung einer Proteinzutat für ein Speiseeis sowie dem mit dieser Proteinzutat hergestellten Speiseeis gemäß den Ansprüchen 1 und 14 gelöst. Besonders vorteilhafte Ausgestaltungen des Verfahrens und des Speiseeises sind Gegenstand der Unteransprüche oder können der nachfolgenden Beschreibung entnommen werden.

Bei dem vorgeschlagenen Verfahren zur Herstellung einer pflanzlichen Proteinzutat für ein Speiseeis, im Folgenden auch als Zutat oder Lupinenzutat bezeichnet, werden zunächst Lupinenkerne zerkleinert. Die Lupinenkerne können dabei in geschältem oder ungeschältem Zustand eingesetzt werden. In einem Protein-Extraktionsschritt wird dann ein Teil des in den zerkleinerten Lupinenkernen enthaltenen Lupinenproteins in einer wässrigen Phase gelöst oder zumindest feinst dispergiert, wobei der pH-Wert der wässrigen Phase auf einen Wert zwischen 6 und 7 eingestellt wird. Danach können die Fasern, vorzugsweise mit Hilfe mechanischer Verfahren, von der Proteinlösung abgetrennt werden. Schließlich wird das Lupinenprotein aus der nun faserfreien flüssigen Phase abgetrennt. Dies erfolgt vorteilhaft mit Verfahren nach Stand der Technik wie z.B. durch Fällung und Abtrennung der gefällten proteinhaltigen Fraktion von der wässrigen Fraktion. Selbstverständlich sind auch zusätzliche Verfahrensschritte zur Gewinnung der beschriebenen Zutat möglich. Das Protein wird dem Speiseeis als natives Protein zugegeben.

Das erfindungsgemäße Speiseeis mit dieser Proteinzutat, vorzugsweise ein rein pflanzliches Speiseeis, enthält als eine Proteinfraktion Lupinenprotein und als eine Fettfraktion Pflanzenöl oder Pflanzenfett. Durch den wässrigen Extraktionsschritt bei der Herstellung der Zutat bei sauren pH-Werten im pH-Bereich zwischen pH 6 und kleiner als pH 7, am besten bei pH 6,8, wird ein besonders geschmacksneutrales und farbloses Eis gewonnen. Damit werden Substanzen, die im Alkalischen zu Farb-Reaktion neigen, nicht zur Reaktion gebracht und es kann eine fast weiße Speiseeis-Farbe erhalten werden.

Besonders vorteilhaft ist der Einsatz einer Zutat, die Lupinenprotein in Verbindung mit Lupinenöl enthält. Dies kann erreicht werden, indem die Lupinenkerne oder zerkleinerten Lupinenkerne vor dem Protein-Extraktionsschritt keiner Entfettung oder Entölung unterzogen werden, so dass die abgetrennte Zutat bei der Abtrennung der Lupinenproteine aus der Lösung auch Lupinenöl enthält.

Überraschenderweise kann alleine auf Basis der gemäß dem Verfahren hergestellten Zutat aus Lupinenprotein mit Lupinenöl, ggf. nach Zugabe eines weiteren Pflanzenöls, ohne weitere Zutaten tierischen Ursprungs ein sensorisch überaus ansprechendes Speiseeis hergestellt werden. Auf Basis der genannten Lupinenzutat kann erstmals ein rein pflanzliches Speiseeis bereitgestellt werden, das ein Mundgefühl aufweist, das vergleichbar dem von konventioneller (Premium-)Eiskrem ist und das im Kälteempfinden und in der Kremigkeit die Qualitätsparameter sogar teilweise übersteigt. Mittels, weiterer pflanzlicher Zutaten wie Zucker, Verdickungsmittel sowie natürlichen Farbstoffen, Aromen und weiterer pflanzlicher Zutaten kann eine geschmackliche Vielfalt an Lupineneissorten hergestellt werden, die höchsten Qualitätsansprüchen genügt.

Besondere sensorische Vorteile ergeben sich, wenn das in oben genannter Zutat enthaltene Lupinenöl aus denselben Lupinenkernen stammt, wie das Lupinenprotein. Durch Kombination dieser beiden Pflanzenfraktionen aus derselben Saat bilden sich überaus vorteilhafte, techno-funktionell wirkende Wechselwirkungen zwischen Protein und Öl und den ggf. zusätzlich zugegebenen Ölen und Fetten aus. Dies führt zu einer besonders stabilen, glatten und kremigen Speiseeisstruktur, die zur Steigerung des Genusswertes beiträgt.

Als zusätzlich zugesetzte pflanzliche Öle bieten sich Öle aus Leguminosen wie Lupine oder Soja an. Es können auch Öle aus Ölsaaten oder Ölfrüchten wie beispielsweise Raps, Sonnenblume, Lein, Palm und Olive in nativer Form, in raffinierter Form und in Einzelfällen auch in gehärteter Form eingesetzt werden. Auch der Einsatz anderer Pflanzenöle oder -fette ist möglich. Besondere ernährungsphysiologische Vorteile werden erhalten bei Einsatz von Ölen mit mehr als 80 Gew.-% an ungesättigten Fettsäuren, besser >90 Gew.-%. Der Gesamtfettgehalt im Lupineneis wird vorteilhaft auf Werte zwischen 3 bis 20 Gew.-% eingestellt, besonders vorteilhaft 6 bis 12 Gew.-%.

In verschiedenen Rezepturen zeigt sich, dass die genannten Mischungen aus Lupinenöl und Lupinenprotein, die aus der gleichen Saat stammen, als Zutat für das Eis besondere Vorteile bringen. Dabei sollte der Anteil des Lupinenöls bezogen auf die Masse des Lupinenproteins mindestens 1,5 Gew.-% betragen. Eine besonders gute Kremigkeit wird erhalten, wenn mehr als 5 Gew.-%, besser mehr als 10 Gew.-% Lupinenöl im Protein enthalten sind. Dabei zeigt sich, dass besonders kremige Texturen erhalten werden, wenn vor der Trennung von Lupinenprotein und Lupinenfaser keine Verfahren zur Abtrennung von Lupinenöl von der Lupinensaat eingesetzt werden.

Besonders ansprechende organoleptische Eigenschaften des Eises werden bei Einsatz von Süßlupinen erhalten, im Besonderen bei Einsatz blauer oder weißer Lupinen mit Alkaloidgehalten <0,01 Gew.-%, besser <0,001 Gew.-%. Sensorisch besonders geeignete Lupinenkerne stammen aus den klimatischen Verhältnissen Mitteleuropas z.B. aus deutschem Anbau.

Vor allem Lupinensorten mit reduziertem Fettgehalt <15 Gew.-%, besser <10 Gew.-% in der Saat sind besonders gut für den Einsatz in Speiseeis geeignet.

Ein Faserstoff-freies Speiseeis wird erhalten, wenn die zum Einsatz kommenden Lupinen vor der Trennung von Protein und Fasern, beispielsweise mit Hilfe eines Walzenstuhls, flockiert werden und somit vergleichsweise große Lupinen-Partikel (Lupinenflakes) entstehen, die nach der Proteinextraktion einfach mechanisch abgetrennt werden können. Ein Zermahlen der Lupinensamen zu Lupinenmehl kann demgegenüber dazu führen, dass viele faserige Komponenten nach der mechanischen Trennung im Proteinextrakt verbleiben und damit ins Speiseeis gelangen. Das Flockieren hat darüber hinaus den besonderen Vorteil, dass durch das Aufbrechen der Zellstrukturen sowohl das Lupinenprotein als auch das Lupinenöl dem wässrigen Extraktionsverfahren besser zugänglich gemacht werden.

Ein ausgeprägt kremiges Eis mit hochviskosem Schmelz wird erhalten, wenn dem Lupineneismix vor dem Freezen eine verdickend wirkende Zutat zugesetzt wird. Dies können lösliche Stoffe sein, die in gelöster Form bei ausreichender Konzentration die Viskosität von reinem Wasser auf über 10 mPas erhöhen, besonders vorteilhaft >100 mPas. Als verdickend wirkende Stoffe kann der Fachmann auf eine Vielzahl an Lebensmittelzutaten zurückgreifen. Beispiele sind hier u.a. Saccharide wie Mono-, Oligo- oder Polysaccharide. Besonders vorteilhaft erweist sich auch der Einsatz von Maltodextrin. Auch der Einsatz anderer Natur-Polymere kann vorteilhaft sein. Der Einsatz derartiger Stoffe im Speiseeis ermöglicht die teilweise Reduktion des Fettgehaltes im Eis, ohne dabei die Kremigkeit negativ zu beeinflussen. Ein sensorisch ansprechendes fettreduziertes pflanzliches Speiseeis wird somit ermöglicht.

Eine besonders geeignete Lupinenzutat wird erhalten, wenn die im Fraktionierungsprozess anfallende wässrige Proteinlösung nach der Faserabtrennung mit Säure versetzt wird. Dabei fallen Protein- und Öl-haltige Flocken aus. Der Ölgehalt der Flocken kann durch Variation des pH-Wertes bei der Fällung eingestellt werden. Bei einer stärker sauren Fällung (z.B. pH = 4,5) ist der Ölanteil des ausgefällten Proteins niedriger, bei einem pH-Wert von 5 ist der Ölanteil höher. So kann durch die Wahl des pH-Wertes bei der Fällung auf den Ölanteil in der Lupinenzutat Einfluss genommen werden.

Aus einer derart gefällten Protein-Öl-Zutat kann nach mechanischer Eindickung, z.B. mittels Dekanter, und anschließender Trocknung auch eine trockene Zutat gewonnen werden, die zur Herstellung eines sensorisch ansprechenden Speiseeises genutzt werden kann.

Von besonderem Genusswert ist allerdings der direkte Einsatz der gefällten, ggf. zur Reduktion des Oligosaccharidgehaltes noch einmal gewaschenen, wasserhaltigen Protein-Öl-Zutat zur Herstellung des Speiseeises. Hierbei bleibt die Löslichkeit des Proteins auf einem sehr hohen Niveau, so dass das Mundgefühl aufgrund fehlender ungelöster Proteinpartikel im Speiseeis deutlich verbessert ist. Als besonders vorteilhaft erweist sich die Sensorik des Speiseeises, wenn die Zutat vor der Verarbeitung im Speiseeis-Grundmix noch mehr als 50 Gew.-% Wasser enthält. In Einzelfällen kann aber auch mit einem Wassergehalt von 3 bis 5 Gew.-% noch ein ansprechendes Speiseeis hergestellt werden.

Für eine Vielzahl von Verbrauchern ist es von Vorteil, die in Lupinenkernen enthaltenen Oligosaccharide weitgehend von der Lupinenzutat abzutrennen, da Oligosaccharide Verdauungsprobleme auslösen können und zudem einen bitteren Geschmack hervorrufen.

In einer vorteilhaften Variante zur Herstellung einer Oligosaccharid-reduzierten Lupinenzutat mit nur geringem Bittergeschmack werden daher die aus der wässrigen Proteinlösung mittels saurer Fällung abgetrennten proteinhaltigen Flocken mit Wasser nachgewaschen. Hierbei ist es sinnvoll, Wasser zu verwenden, in dem der pH-Wert auf das Minimum an Proteinlöslichkeit eingestellt ist. Das Trennen von Protein und Oligosaccharid-haltigem Waschwasser erfolgt dabei vorzugsweise mit zentrifugalen Trenntechniken z.B. mittels Dekanter. Der Vorgang des Waschens des Proteins kann auch mehrfach wiederholt werden, um eine besonders niedrige Konzentration an Oligosacchariden in der Proteinzutat zu erzielen.

Es ist auch möglich, den Vorgang der Oligosaccharid-Abtrennung aus der Lupinensaat mit Hilfe von Wasser vor dem Extraktionsschritt durchzuführen. Auch hierbei ist es sinnvoll, Wasser zu verwenden, in dem der pH-Wert auf das Minimum an Proteinlöslichkeit eingestellt ist. Zur Abtrennung der Oligosaccharide werden zerkleinerte Lupinenkerne bzw. - samen (z.B. Lupinenmehl oder Lupinenflakes) mit Wasser in Kontakt gebracht, die Oligosaccharide im Wasser gelöst und das Wasser von dem Lupinenmehl bzw. den Lupinenflakes abgetrennt. Danach kann dann die Extraktion des Lupinenproteins erfolgen. Auch dieser Vorgang kann mehrfach durchgeführt werden.

Die beschriebene Protein-Zutat aus Lupine wird im Speiseeis besonders vorteilhaft mit einer Konzentration von mindestens 1 Gew.-% zugesetzt, wobei die Massenangabe auf den Proteinanteil in der Zutat bezogen ist. Als besonders geeignete Konzentration erweisen sich Rezepturen mit 3 bis 4 Gew.-% an Lupinenprotein. In Einzelfällen kann es vorteilhaft sein, dem Speiseeis bis zu 10 bis 15 Gew.-% an Lupinenprotein zu zusetzen.

Ein cholesterinsenkendes Eis kann besonders vorteilhaft gewonnen werden, wenn dem Speiseeis auch Fraktionen aus der Lupinensaat zugesetzt werden, die bei der Herstellung der beschriebenen Lupinenzutat abgetrennt werden. Dies können die Faserstoffe sein oder die bei pH 4,5 lösliche Proteinfraktion, die durch Filtrationsverfahren und Trocknungsverfahren aufkonzentriert werden kann. Diese Fraktionen der Lupine haben ein besonders ausgeprägtes cholesterinsenkendes Potential, weshalb schon geringe Mengen dieser Stoffe eine cholesterinsenkende Wirkung beim Menschen aufweisen. Besonders vorteilhaft wird die letztgenannte lösliche Proteinfraktion in einem höheren Verhältnis zugesetzt, als sie im Vergleich zur Lupinenzutat in der nativen Saat vorliegt.

Die Zugabe ausgewählter pflanzlicher Ölsorten als zusätzliche Fettzutat neben Lupinenöl ermöglicht die Herstellung eines gesunden Speiseeises mit einem ausgewogenen Verhältnis aus Omega 3 und Omega 6 Fettsäuren. Besonders günstige ernährungsphysiologische Eigenschaften des Speiseeises werden erhalten, wenn das zugesetzte Speiseöl Rapsöl ist, vorzugsweise natives Rapsöl. Auch Öle aus der Sonnenblume oder aus anderen Ölsaaten sind geeignet.

Zur Einstellung eines süßen Geschmacks können dem Speiseeis Süßungsmittel wie Zucker, Glucosesirup, Honig oder andere Süßstoffe in unterschiedlichen Gewichtsanteilen zugesetzt werden. Die Zugabe von aroma- und farbgebenden Zutaten ermöglicht die Einstellung einer breiten Vielfalt an Geschmacksrichtungen. Besonders vorteilhaft zur Abrundung des leicht nussigen Aromas des Lupinenproteins sind Geschmacksrichtungen mit nussigem Charakter wie unter anderem Walnuss, Haselnuss, Mandel oder Pistazie. Ebenfalls ein angenehmes Geschmacksempfinden wird erhalten durch Zugabe von Zusätzen aus Erdbeere, Himbeere, Kirsche, Schokolade oder Vanille.

Als besonders schmackhafte Eiskreation erweist sich in sensorischen Untersuchungen die Geschmacksrichtung "Lupine". Hierbei werden dem Eismix neben der Lupinenzutat außer Zucker und Pflanzenöl keine geschmacksgebenden Zutaten zugesetzt.

Es kann erwünscht und teilweise auch von Vorteil sein, dem Lupineneis weitere Zutaten zuzusetzen wie z.B. weitere pflanzliche Proteine, Emulgatoren pflanzlichen oder tierischen Ursprungs oder andere tierische Zutaten. Der Fachmann wird in der Lage sein, aus der Vielzahl der zulässigen Lebensmittelzutaten solche auszuwählen, die zur Erreichung einer definierten sensorischen Eigenschaft des Speiseeises benötigt werden.

Alle der bislang genannten Zutaten können mit herkömmlichen Methoden der Eiskrem-Herstellung durch mischen, homogenisieren der Zutaten, pasteurisieren, kühlen und reifen lassen des Eis-Mixes sowie gefrieren und Luftdispergierung z.B. in einem Freezer hergestellt werden.

Das Wasser kann entweder direkt zugegeben werden oder in Form wässriger Lösungen, die bereits Aromastoffe oder Zucker oder andere Zutaten oder Zusatzstoffe enthalten können wie z.B. Limonaden, Säfte oder andere wässrige Lösungen.

Bei dem erfindungsgemäßen Verfahren kommt als Lupinenprotein natives Lupinenprotein zum Einsatz. Unter nativem Protein wird verstanden, dass das Protein vor dem Zusatz zum Speiseeis nicht in Kontakt mit Alkoholen oder anderen organischen Lösemitteln wie z.B Hexan gebracht wurde und keine thermische Behandlung oberhalb 60 °C erfahren hat.

Eine besondere Verbraucherakzeptanz wird erhalten, wenn im erfindungsgemäßen Speiseeis gänzlich auf Produkte tierischer Herkunft verzichtet wird. So sollte insbesondere auf den Zusatz von Emulgatoren wie Mono- und Diglyceride von tierischen Fetten verzichtet werden oder auf den Einsatz von Proteinen tierischer Herkunft wie Albumine, Eiproteine, Molkenproteine, Milchproteine, Caseine oder Caseinate wie z.B. Natrium-Caseinat. Bei Eisrezepturen mit Pflanzenproteinen nach Stand der Technik wird bislang zur Erreichung einer stabilen Emulsion auf derartige Emulgatoren zurückgegriffen, wie z.B. auf Produkte wie Coffe-mate^{®} von Nestle, welches Caseinat und/oder Milchpulver enthält. Damit kann zwar eine gute Kremigkeit erzielt werden, es handelt sich dann aber nicht mehr um ein rein pflanzliches Speiseeis.

In einer vorteilhaften Ausgestaltung enthält das erfindungsgemäße Speiseeis 40 bis 80 Gew.-% Wasser und 5 bis 25 Gew.-% Zucker, besonders vorteilhaft 10 bis 15 Gew.-%.

In einer weiteren vorteilhaften Ausgestaltung enthält das erfindungsgemäße Speiseeis 1 - 10-Gew.-% Pflanzenprotein, vorzugsweise 2 bis 4 Gew.-%.

In einer weiteren vorteilhaften Ausgestaltung enthält das erfindungsgemäße Speiseeis 3 - 20 Gew.-% Pflanzenöl oder Pflanzenfett, vorzugsweise 6 bis 12 Gew.-%.

In einer besonders vorteilhaften Ausgestaltung wird vollständig auf Zusatzstoffe verzichtet, womit eine Deklarierung der Zusatzstoffe (z.B. E-Nr. 471) entfallen kann.

## Patentansprüche

1. Verfahren zur Herstellung einer pflanzlichen Proteinzutat, die einem Speiseeis zugegeben wird, bei dem
- Lupinenkerne bereitgestellt und zunächst zerkleinert werden,
- in einem oder mehreren Protein-Extraktionsschritten ein Teil eines in den zerkleinerten Lupinenkernen enthaltenen Lupinenproteins in einer wässrigen Phase gelöst oder zumindest dispergiert wird,
- in der wässrigen Phase vorhandene Fasern abgetrennt werden, und
- das Lupinenprotein aus der wässrigen Phase abgetrennt wird, um die Proteinzutat zu erhalten,
- wobei zumindest für einen der Protein-Extraktionsschritte ein pH-Wert der wässrigen Phase von 6 ≤ pH < 7 eingestellt wird und
- wobei das Protein dem Speiseeis als natives Protein zugegeben wird.

2. Verfahren nach Anspruch 1,
**dadurch gekennzeichnet,**
**dass** die Lupinenkerne als vollfette Saat oder als geschälte Saat zerkleinert und dem Protein-Extraktionsschritt unterzogen werden, so dass die Proteinzutat einen Anteil an Lupinenöl enthält.

3. Verfahren nach Anspruch 1,
**dadurch gekennzeichnet,**
**dass** die zerkleinerten Lupinenkerne vor dem Protein-Extraktionsschritt keinem Entölungsprozess mit Lösemitteln unterzogen werden, so dass die Proteinzutat einen Anteil an Lupinenöl enthält.

4. Verfahren nach Anspruch 2 oder 3,
**dadurch gekennzeichnet,**
**dass** der Anteil des Lupinenöls bezogen auf das Gewicht des Lupinenproteins in der Proteinzutat auf mindestens 1,5 Gew.-%, vorzugsweise auf > 5 Gew.-% oder > 10 Gew.-%, eingestellt wird.

5. Verfahren nach einem der Ansprüche 1 bis 4,
**dadurch gekennzeichnet,**
**dass** für den zumindest einen Protein-Extraktionsschritt ein pH-Wert der wässrigen Phase von 6,8 eingestellt wird.

6. Verfahren nach einem der Ansprüche 1 bis 5,
**dadurch gekennzeichnet,**
**dass** die Zerkleinerung der Lupinenkerne durch Flockierung erfolgt.

7. Verfahren nach einem der Ansprüche 1 bis 6,
**dadurch gekennzeichnet,**
**dass** die Proteinzutat mit einem Wassergehalt von mindestens 5 Gew.-% hergestellt wird.

8. Verfahren nach einem der Ansprüche 1 bis 6,
**dadurch gekennzeichnet,**
**dass** die Proteinzutat mit einem Wassergehalt von mehr als 50 Gew.-% hergestellt wird.

9. Verfahren nach einem der Ansprüche 1 bis 8,
**dadurch gekennzeichnet,**
**dass** die zerkleinerten Lupinenkerne vor dem Protein-Extraktionsschritt gewaschen werden, um Oligosaccharide abzutrennen, wobei der pH-Wert eines hierbei eingesetzten Waschwassers nahe am Löslichkeitsminimum der Lupinenproteine eingestellt wird.

10. Verfahren nach einem der Ansprüche 1 bis 9,
**dadurch gekennzeichnet,**
**dass** die Abtrennung des Lupinenproteins aus der wässrigen Phase durch Zugabe von Säure erfolgt, wodurch Protein- und Öl-haltige Flocken ausgefällt werden, wobei der Ölgehalt der Flocken über den durch die Säure steuerbaren pH-Wert der wässrigen Phase gezielt eingestellt wird.

11. Verfahren nach Anspruch 10,
**dadurch gekennzeichnet,**
**dass** die mittels saurer Fällung abgetrennten Flocken gewaschen werden, um Oligosaccharide abzutrennen, wobei der pH-Wert eines hierbei eingesetzten Waschwassers nahe am Löslichkeitsminimum der Lupinenproteine eingestellt wird.

12. Verfahren nach einem der Ansprüche 1 bis 11,
**dadurch gekennzeichnet,**
**dass** Lupinenkerne von Lupinensorten bereitgestellt werden, die einen reduzierten Fettgehalt von < 15 Gew.-%, vorzugsweise < 10 Gew.-%, in der Saat aufweisen.

13. Verfahren nach einem der Ansprüche 1 bis 12,
**dadurch gekennzeichnet,**
**dass** dem Lupinenprotein ein Anteil an pflanzlichem Öl zugegeben wird, um die Proteinzutat zu erhalten.

14. Speiseeis mit einer Proteinzutat, die mit dem Verfahren nach einem oder mehreren der vorangehenden Patentansprüche hergestellt wurde.

15. Speiseeis nach Anspruch 14,
**dadurch gekennzeichnet,**
**dass** das Speiseeis mindestens 1 Gew.-% Lupinenprotein der Proteinzutat enthält.

16. Speiseeis nach Anspruch 14,
**dadurch gekennzeichnet,**
**dass** das Speiseeis 3 bis 4 Gew.-% Lupinenprotein der Proteinzutat enthält.

17. Speiseeis nach einem der Ansprüche 14 bis 16,
**dadurch gekennzeichnet,**
**dass** das Speiseeis 40 bis 80 Gew.-% Wasser und 5 bis 25 Gew.-% Zucker enthält.

18. Speiseeis nach einem der Ansprüche 14 bis 17,
**dadurch gekennzeichnet,**
**dass** das Speiseeis 1 bis 10 Gew.-% Pflanzenprotein enthält.

19. Speiseeis nach einem der Ansprüche 14 bis 18,
**dadurch gekennzeichnet,**
**dass** das Speiseeis 3 bis 20 Gew.-% Pflanzenöl oder Pflanzenfett enthält.

20. Speiseeis nach einem der Ansprüche 14 bis 18,
**dadurch gekennzeichnet,**
**dass** das Speiseeis 6 bis 12 Gew.-% Pflanzenöl oder Pflanzenfett enthält.

21. Speiseeis nach einem der Ansprüche 14 bis 20,
**dadurch gekennzeichnet,**
**dass** das Speiseeis eine verdickend wirkende Zutat enthält.

22. Speiseeis nach einem der Ansprüche 14 bis 21,
**dadurch gekennzeichnet,**
**dass** das Speiseeis ein oder mehrere Fraktionen enthält, insbesondere Faserstoffe und/oder Proteine, die bei der Herstellung der Proteinzutat angefallen sind und nicht für die Proteinzutat verwendet wurden.

23. Speiseeis nach einem der Ansprüche 14 bis 22,
**dadurch gekennzeichnet,**
**dass** das Speiseeis außer der Proteinzutat und Zucker keine weiteren geschmacksbildenden Zutaten enthält.

24. Speiseeis nach einem der Ansprüche 14 bis 23 mit rein pflanzlichen Zutaten.

## Claims

1. A method for producing a vegetable protein ingredient which is added to ice cream, wherein
- lupin seeds are provided and firstly crushed,
- in one or several protein extraction steps part of the lupin protein contained in the crushed lupin seeds is dissolved or at least dispersed in an aqueous phase,
- any fibres present in the aqueous phase are separated, and
- the lupin protein is separated from the aqueous phase in order to obtain the protein ingredient,
- wherein for at least one of the protein extraction steps a pH value of 6 ≤ pH < 7 is set for the aqueous phase and
- wherein the protein is added to the ice cream as a native protein.

2. The method according to Claim 1,
**characterised in that**
the lupin seeds are crushed as full-fat seed or as hulled seed and are subjected to the protein extraction step, such that the protein ingredient contains a proportion of lupin oil.

3. The method according to Claim 1,
**characterised in that**
the crushed lupin seeds are not subjected to an oil extraction process with solvents before the protein extraction step, such that the protein ingredient contains a proportion of lupin oil.

4. The method according to Claim 2 or 3,
**characterised in that**
the proportion of lupin oil is set to at least 1.5% by weight, preferably to > 5% by weight or > 10% by weight in relation to the weight of the lupin protein in the protein ingredient.

5. The method according to any one of Claims 1 to 4,
**characterised in that**
for the at least one protein extraction step a pH value of 6.8 is set for the aqueous phase.

6. The method according to any one of Claims 1 to 5,
**characterised in that**
the crushing of the lupin seeds occurs by flaking.

7. The method according to any one of Claims 1 to 6,
**characterised in that**
the protein ingredient is produced with a water content of at least 5% by weight.

8. The method according to any one of Claims 1 to 6,
**characterised in that**
the protein ingredient is produced with a water content of more than 50% by weight.

9. The method according to any one of Claims 1 to 8,
**characterised in that**
the crushed lupin seeds are washed before the protein extraction step to separate oligosaccharides, the pH value of a washing water employed for this being set near the solubility minimum of the lupin proteins.

10. The method according to any one of Claims 1 to 9,
**characterised in that**
the separation of the lupin proteins from the aqueous phase occurs through the addition of acid, whereby protein and oil containing flakes are precipitated, the oil content of the flakes being set specifically via the pH value controllable through the acid in the aqueous phase.

11. The method according to Claim 10,
**characterised in that**
the flakes separated by means of acid precipitation are washed to separate oligosaccharides, the pH value of a washing water employed for this being set near the solubility minimum of the lupin proteins.

12. The method according to any one of Claims 1 to 11,
**characterised in that**
the lupin seeds are provided by lupin species having a reduced fat content of < 15% by weight, preferably < 10% by weight in the seed.

13. The method according to any one of Claims 1 to 12,
**characterised in that**
a proportion of vegetable oil is added to the lupin protein to obtain the protein ingredient.

14. An ice cream with a protein ingredient produced by the method according to one or more of the preceding patent claims.

15. The ice cream according to Claim 14,
**characterised in that**
the ice cream contains at least 1% by weight of lupin protein of the protein ingredient.

16. The ice cream according to Claim 14,
**characterised in that**
the ice cream contains 3 to 4% by weight of lupin protein of the protein ingredient.

17. The ice cream according to any one of Claims 14 to 16,
**characterised in that**
the ice cream contains 40 to 80% by weight of water and 5 to 25% by weight of sugar.

18. The ice cream according to any one of Claims 14 to 17,
**characterised in that**
the ice cream contains 1 to 10% by weight of vegetable protein.

19. The ice cream according to any one of Claims 14 to 18,
**characterised in that**
the ice cream contains 3 to 20% by weight of vegetable oil or vegetable fat.

20. The ice cream according to any one of Claims 14 to 18,
**characterised in that**
the ice cream contains 6 to 12% by weight of vegetable oil or vegetable fat.

21. The ice cream according to any one of Claims 14 to 20,
**characterised in that**
the ice cream contains a thickening ingredient.

22. The ice cream according to any one of Claims 14 to 21,
**characterised in that**
the ice cream contains one or more fractions, in particular fibres and/or proteins which were precipitated during production of the protein ingredient and were not used for the protein ingredient.

23. The ice cream according to any one of Claims 14 to 22,
**characterised in that**
the ice cream contains no further flavour forming ingredients apart from the protein ingredient and sugar.

24. The ice cream according to any one of Claims 14 to 23 with purely vegetable ingredients.

## Revendications

1. Procédé qui est destiné à fabriquer un ingrédient protéinique végétal entrant dans la composition d'une crème glacée et qui consiste à
- fournir des graines de lupin pour d'abord les broyer,
- effectuer une ou plusieurs étapes d'extraction de protéines visant à dissoudre, dans une phase aqueuse, une partie de la protéine de lupin contenue dans les graines de lupin broyées, ou au moins à la disperser dans ladite phase,
- séparer les fibres contenues dans la phase aqueuse, et
- séparer la protéine de lupin de la phase aqueuse pour ainsi obtenir ledit ingrédient protéinique,
- le pH de la phase aqueuse étant réglé, au moins pour l'une des étapes d'extraction de protéine, à une valeur de 6 ≤ pH < 7, et
- ladite protéine étant ajoutée à la crème glacée sous forme d'une protéine native.

2. Procédé selon la revendication 1, **caractérisé en ce que** les graines de lupin sont broyées et soumises à l'étape d'extraction de protéines sous forme de graines à pleine teneur en matière grasse ou sous forme de graines décortiquées, ledit ingrédient protéinique contenant ainsi une proportion d'huile de lupin.

3. Procédé selon la revendication 1, **caractérisé en ce que** préalablement à l'étape d'extraction de protéines, les graines de lupin broyées ne sont soumises à aucun processus de déshuilage, ledit ingrédient protéinique contenant ainsi une proportion d'huile de lupin.

4. Procédé selon les revendications 2 ou 3, **caractérisé en ce que** la proportion d'huile de lupin dans ledit ingrédient protéinique est réglée de manière à représenter au moins 1,5 % en poids, de préférence > 5 % en poids ou > 10 % en poids, par rapport au poids de la protéine de lupin.

5. Procédé selon l'une des revendications 1 à 4, **caractérisé en ce que** pour l'au moins une étape d'extraction de protéines, on règle le pH de la phase aqueuse à une valeur de 6,8.

6. Procédé selon l'une des revendications 1 à 5, **caractérisé en ce que** le broyage des graines de lupin est réalisé par transformation en flocons.

7. Procédé selon l'une des revendications 1 à 6, **caractérisé en ce que** l'on fabrique ledit ingrédient protéinique de manière à ce que sa teneur en eau soit supérieure ou égal à 5 % en poids.

8. Procédé selon l'une des revendications 1 à 6, **caractérisé en ce que** l'on fabrique ledit ingrédient protéinique de manière à ce que sa teneur en eau soit supérieure à 50 % en poids.

9. Procédé selon l'une des revendications 1 à 8, **caractérisé en ce que**, préalablement à l'étape d'extraction de protéines, les graines de lupin broyées sont lavées pour ainsi séparer des oligosaccharides, le pH de l'eau de lavage mise en oeuvre à cet effet étant réglé à une valeur proche du minimum de solubilité des protéines de lupin

10. Procédé selon l'une des revendications 1 à 9, **caractérisé en ce que** la séparation de la protéine de lupin à partir de la phase aqueuse est réalisée en ajoutant de l'acide, pour ainsi précipiter des flocons contenant des protéines et des huiles, la teneur en huile desdits flocons étant réglée à une valeur cible au moyen du pH de la phase aqueuse, lequel peut être ajusté au moyen dudit acide.

11. Procédé selon la revendication 10, **caractérisé en ce que** l'on soumet les flocons séparés par précipitation acide à un lavage pour ainsi séparer des oligosaccharides, le pH de l'eau de lavage mise en oeuvre à cet effet étant réglé à une valeur proche du minimum de solubilité des protéines de lupin.

12. Procédé selon l'une des revendications 1 à 11, **caractérisé en ce que** les graines de lupin proviennent de variétés de lupin dont les graines ont une teneur en matières grasses réduite laquelle est < 15 % en poids, de préférence < 10 % en poids

13. Procédé selon l'une des revendications 1 à 12, **caractérisé en ce que** l'on ajoute à la protéine de lupin une proportion d'huile végétale pour ainsi obtenir ledit ingrédient protéinique.

14. Crème glacée comportant un ingrédient protéinique qui a été fabriqué en mettant en oeuvre le procédé selon une ou plusieurs des revendications précédentes.

15. Crème glacée selon la revendication 14, **caractérisée en ce que** ladite crème glacée contient au moins 1 % en poids de protéine de lupin issue dudit ingrédient protéinique.

16. Crème glacée selon la revendication 14, **caractérisée en ce que** ladite crème glacée contient 3 à 4 % en poids de protéine de lupin issue dudit ingrédient protéinique.

17. Crème glacée selon l'une des revendications 14 à 16, **caractérisée en ce que** ladite crème glacée contient 40 à 80 % en poids d'eau et 5 à 25 % en poids de sucre.

18. Crème glacée selon l'une des revendications 14 à 17, **caractérisée en ce que** ladite crème glacée contient 1 à 10 % en poids de protéine végétale.

19. Crème glacée selon l'une des revendications 14 à 18, **caractérisée en ce que** ladite crème glacée contient 3 à 20 % en poids d'huile végétale ou de graisse végétale.

20. Crème glacée selon l'une des revendications 14 à 18, **caractérisée en ce que** ladite crème glacée contient 6 à 12 % en poids d'huile végétale ou de graisse végétale.

21. Crème glacée selon l'une des revendications 14 à 20, **caractérisée en ce que** ladite crème glacée contient un ingrédient ayant un effet épaississant.

22. Crème glacée selon l'une des revendications 14 à 21, **caractérisée en ce que** ladite crème glacée contient une ou plusieurs fractions, s'agissant notamment de matières fibreuses et/ou de protéines, lesquelles sont issues de la fabrication dudit ingrédient protéinique et n'entrent pas dans l'élaboration dudit ingrédient protéinique.

23. Crème glacée selon l'une des revendications 14 à 22, **caractérisée en ce que** ladite crème glacée contient, outre ledit ingrédient protéinique et du sucre, pas d'autres ingrédients lui conférant des qualités gustatives.

24. Crème glacée selon l'une des revendications 14 à 23 comportant exclusivement des ingrédients végétaux.
